# EUROPÄISCHE PATENTSCHRIFT

(11) **EP 0 465 620 B1**
(45) Veröffentlichungstag und Bekanntmachung des Hinweises auf die Patenterteilung: **12.04.1995**
(21) Anmeldenummer: 91902658.3
(22) Anmeldetag: 26.01.1991
(51) Int. Cl.: C23G 1/24, C23G 3/00

(54) **VERFAHREN ZUR ENTÖLUNG VON KLEINTEILIGEM FESTSTOFFGUT, INSBESONDERE METALLHALTIGEN PRODUKTIONSRÜCKSTÄNDEN UND VERUNREINIGTEN BÖDEN**
PROCESS FOR REMOVING OIL FROM FINELY DIVIDED SOLID MATERIAL, ESPECIALLY METAL-CONTAINING PRODUCTION WASTE AND SOILED FLOORS
PROCEDE DE DESHUILAGE DES PRODUITS SOLIDES A PARTICULES DE FAIBLE DIMENSION, EN PARTICULIER LES RESIDUS DE PRODUCTION CONTENANT DES METAUX ET LES SOLS SOUILLES

(30) Priorität: 29.01.1990 DE 4002478; 01.09.1990 DE 4027787
(43) Veröffentlichungstag der Anmeldung: 15.01.1992
(73) Patentinhaber: PREUSSAG AKTIENGESELLSCHAFT, 30625 Hannover (DE)
(72) Erfinder: GRALHER, Manfred, D-3380 Goslar (DE)
(86) Internationale Anmeldenummer: DE9100077
(87) Internationale Veröffentlichungsnummer: WO9111543

(56) Entgegenhaltungen:
- EP-A- 0 019 752
- DE-A- 3 434 128
- FR-A- 2 361 478
- US-A- 3 810 786
- W.R.A. Vauck, H.A. Müller: "Grundoperationen chemischer Verfahrenstechnik", Seite 328, 6. Auflage, 1982

## Beschreibung

Die Erfindung betrifft ein Verfahren zur Entölung von kleinteiligem Feststoffgut, insbesondere metallhaltigen Produktionsrückständen und verunreinigten Böden, bei dem das Feststoffgut mit einer wäßrigen Spülflüssigkeit gewaschen wird, wobei das Öl in der Spülflüssigkeit emulgiert, und die Spülflüssigkeit vom Feststoffgut abgetrennt wird.

In der metallverarbeitenden Industrie fallen vor allem bei der spanabhebenden Bearbeitung große Mengen mineralölhaltiger Metallspäne und Metallschlämme an. Ein Teil dieser hochwertigen Abfallprodukte wird, soweit dies wirtschaftlich durchführbar ist, entölt und dann als Vorstoff Metallhütten zur Rückgewinnung der Metalle zugeführt. Für einen Großteil dieser Produktionsrückstände gibt es jedoch gegenwärtig trotz zum Teil erheblicher Wertstoffinhalte keine Verwertungsmöglichkeit, da es an wirtschaftlichen Verfahren ihrer Entölung fehlt und ein Umschmelzen oder eine Verhüttung aufgrund des vorhandenen Ölgehalts nicht möglich ist. So ist bei allen Metallhüttenprozessen ein Ölgehalt in den Vorstoffen störend und daher unerwünscht, weil entweder das Öl während des Einschmelzvorganges zu erheblichen Verzunderungsverlusten führt, oder das Öl sich während des Einschmelzprozesses ohne zu verbrennen verflüchtigt und in der nachgeschalteten Entstaubung abgeschieden wird, wo es Filterverstopfungen, Anbackungen und im Extremfall Brände hervorrufen kann. Ein erheblicher Teil Produktionsrückstände muß daher gegen entsprechende Gebühren auf Sondermülldeponien entsorgt werden.

Für die Entölung metallischer, ölhaltiger Produktionsrückstände sind eine Reihe unterschiedlicher Verfahren bekannt. Bei einer bekannten Verfahrensart wird das Öl mittels organischer Lösungsmittel entfernt. Dieses Verfahren ermöglicht zwar eine sehr weitgehende Reinigung der Reststoffe vom Öl, es erfordert jedoch gasdichte Anlagen mit einem sehr aufwendigen Explosionsschutz. Nichtbrennbare aber FCKW-haltige Lösungsmittel sind infolge der verschärften Umweltauflagen kaum noch wirtschaftlich einsetzbar. Eine andere Verfahrensart ist die thermische Entölung. Sie ist für feinkörnige und oxidationsempfindliche Metalle, wie Mg, Al oder Zn, nur bedingt einsetzbar. Wegen der aufwendigen Abgasreinigung können nur große Zentralanlagen wirtschaftlich arbeiten.

Mechanische Trennverfahren, wie sie auch dem erfindungsgemäßen Verfahren zugrundeliegen, verwenden wäßrige Spülmittel (siehe z.B. FR-A-2 361 478), die diverse Waschmittel, Tensidzusätze, Emulgatoren und andere Hilfsmittel enthalten, um das Öl emulgiert in die wäßrige Phase zu überführen und nach Art einer Fest-/Flüssig-Trennung von den Spänen zu entfernen. Ein Verfahren dieser Art ist aus der DE-OS 27 35 878 zur Entfernung von öligen Schmierflüssigkeitsrückständen von Metallspänen bekannt. Bei diesem bekannten Verfahren werden die Metallspäne mit einer wäßrigen Tensidlösung, die das Tensid in einer zur Emulgierung der Rückstände ausreichenden Menge enthält, unter Bildung eines Gemisches aus den Metallspänen und der Tensidlösung in Berührung gebracht und aus den die emulgierten Rückstände enthaltenden Metallspänen ein Bett erzeugt, durch das ein Fluidstrom hindurchgeleitet wird, der die emulgierten Rückstände aufgrund seiner Strömungsgeschwindigkeit von den Metallspänen entfernt. Die Metallspäne und die Tensidlösung werden zunächst gleichzeitig in einen herkömmlichen Brecher eingetragen, in dem eine Herabsetzung des Schüttvolumens der Metallspäne zur Erleichterung der weiteren Verarbeitung erfolgt, wobei der Brecher die Bildung des gewünschten Gemisches unterstützt. Aus dem Brecher gelangt das Gemisch aus den Metallspänen und der Tensidlösung auf einen Förderer mit einem endlosen durchbrochenen Band in Form eines Filtertuchs oder eines Drahtsiebes, der das Gemisch durch eine Waschstation, eine Spülstation und eine Trockenstation transportiert. In der Waschstation wird mittels mehrerer Brauseköpfe zusätzlich Tensidlösung zugeführt und in der Spülstation erfolgt ein Besprühen mit sauberem Wasser oder dergleichen zur Entfernung eventuell verbliebener Tensidlösungen und Schmierflüssigkeitsrückständen. Bei diesem Verfahren wird eine vergleichsweise hohe Waschmittelkonzentration im Waschfluid benötigt, wodurch die Waschfluidentölung erschwert wird.

Zur Entölung des Waschfluids gibt es eine Reihe unterschiedlicher Verfahren. Es ist bekannt, Emulsionen chemisch, physikalisch, thermisch oder mechanisch zu brechen oder einzuengen. Das gebräuchlichste Verfahren ist, Waschemulsionen durch Elektrolytzusätze zu spalten und die aufschwimmende Phase vom Wasser abzuscheiden. Die dabei verwendeten mehrwertigen Metallsalze oder Säuren bewirken eine erhebliche Aufsalzung des Wassers, die meist so hoch ist, daß das Wasser nicht mehr als Betriebswasser in den Waschprozeß zurückgeführt werden kann.

Adsorptionsverfahren, wie sie auch dem erfindungsgemäßen Verfahren zugrundeliegen, verwenden unterschiedlichste Adsorbentien bzw. Mischungen verschiedenster Adsorbentien zur Ölentfernung aus dem Waschfluid. So sind Verfahren bekannt, die das Öl an Bentonite oder ähnliche Tonminerale binden. Durch geeignete Zusatzmittel, mehrwertige Metallsalze, Flockungsmittel, Kalk u.a. wird das Ölaufnahmevermögen des Adsorbens, die Abscheidung des Feststoffes aus dem Wasser und die Entwässerung des ölhaltigen Feststoffkuchens verbessert. Spezielle hydrophobierte Fällungskieselsäuren werden gleichfalls häufig als Adsorbens verwendet. Die abgetrennten stichfesten Schlämme werden zumeist auf Sondermülldeponien entsorgt. Eine Verbrennung wird zumeist nicht durchgeführt, da die Ölgehalte der Schlämme nur zwischen 5 - 30 % liegen und der als Sondermüll zu deponierende Schlackeanteil sehr hoch ist. Die Umweltgesetzgebung verlangt aber verstärkt, daß ölhaltige Reststoffe einer thermischen Behandlung zugeführt werden.

Der Erfindung liegt die Aufgabe zugrunde, ein Verfahren der eingangs genannten Art in seiner Effektivität zu verbessern und den Verbrauch an Tensiden zu reduzieren.

Zur Lösung dieser Aufgabe sieht das erfindungsgemäße Verfahren vor, daß das Feststoffgut vor dem Waschprozeß intensiv durchmischt und gleichzeitig mit einem Emulgator im wesentlichen ohne Vorhandensein von Wasser besprüht wird und daß bei dem anschließenden Waschprozeß das Feststoffgut durch Rühren in einem Behälter mit der Spülflüssigkeit durchmischt wird.

Das erfindungsgemäße Verfahren verhindert eine Verklumpung der einzelnen Partikel des Feststoffgutes beim Waschprozeß, da das an dem Feststoffgut anhaftende Öl durch die Einwirkung des Emulgators in einer gut in Wasser emulgierbaren Form vorliegt. Der Waschprozeß läßt sich dadurch auf mehr als das Doppelte beschleunigen und der Verbrauch an Emulgator und Tensiden läßt sich bis auf ein Zehntel der bei dem bekannten Verfahren benötigten Menge reduzieren. Durch das anschließende intensive Rühren des Feststoffgutes in der Spülflüssigkeit wird eine gute Ablösung des Öls von den Feststoffpartikeln erreicht und das Emulgieren des Öls in der Spülflüssigkeit wirksam gefördert.

Wesentlich für das erfindungsgemäße Verfahren ist, daß der anfängliche Mischprozeß so intensiv erfolgt, daß möglichst jedes Einzelpartikel des Feststoffgutes allseitig mit Emulgator benetzt wird. Hierzu können handelsübliche Mischer verwendet werden, die ggfs. an das jeweilige Mischgut angepaßt werden müssen. Für Metallspäne haben sich vor allem Freifallmischer nach Art der bekannten Betonmischer als geeignet erwiesen. Für klebrige und agglomerierte Schlämme sind Zwangsmischer, wie z. B. Pflugscharmischer, besser geeignet. Wenn die Konsistenz des Feststoffgutes es zuläßt, kann das Besprühen mit Emulgator auch in einer Art Wirbelschichtverfahren erfolgen, wobei das Feststoffgut durch einen Luftstrom oder durch Vibrationen aufgelockert wird und von einem erzeugten Emulgatornebel allseits gut umspült werden kann. Vorzugsweise kann dabei das Feststoffgut in einer geschlossenen Mischkammer verwirbelt werden, in die der Emulgator in Form eines feinen Nebels eingeleitet wird.

Die aufzusprühende Emulgatormenge ist von der Art und Menge des abzureinigenden Öles und auch von der Intensität des Mischprozesses abhängig. Bezogen auf die Ölmenge sind im allgemeinen ca. 1 - 5 % Emulgator notwendig, um im anschließenden Waschprozeß eine ausreichende und genügend schnelle Ölabreinigung zu erhalten. Bei schlecht mischbaren und zu starker Verkumplung neigenden Schlämmen kann sich die notwendige Emulgatormenge auf 10 % und darüber erhöhen. Es kann ferner vorteilhaft sein, den Emulgator und/oder das Feststoffgut vor oder während des Misch- und Benetzungsvorgangs zu erwärmen. Hierdurch kann die Wirksamkeit des Gesamtprozesses erheblich gesteigert werden.

Die Gegenwart von Wasser kann die Wirksamkeit des Emulgators in der dem Waschprozeß vorausgehenden Einwirkphase erheblich reduzieren. Der Emulgator wird daher vorzugsweise unverdünnt angewendet.

Enthält das Feststoffgut höhere Wasseranteile, so ist es nach dem erfindungsgemäßen Verfahren von Vorteil, wenn das Feststoffgut vor dem Besprühen mit Emulgator weitgehend getrocknet wird. Die Erwärmung des Feststoffgutes kann mit einem eventuell notwendigen Trocknungsprozeß kombiniert werden.

Um die Einwirkung des Emulgators und die Benetzung des Öls noch zu verbessern, kann erfindungsgemäß das mit Emulgator besprühte Feststoffgut vor dem Waschprozeß zwischengelagert werden.

Zum Waschen des Feststoffgutes im Anschluß an das Besprühen mit Emulgator, wobei in Rührbehältern das Feststoffgut mit Hilfe von Rührern mit einer wäßrigen Spülflüssigkeit durchmischt wird, kann bei dem erfindungsgemäßen Verfahren als Spülflüssigkeit Wasser ohne nochmaligen Zusatz von Emulgator verwendet werden. Bei Bedarf können der Spülflüssigkeit jedoch auch Tenside und ähnliche Zusätze beigemischt werden. Während des Waschvorgangs kann die Spülflüssigkeit durch den Rührbehälter hindurchgeleitet werden und es können mehrere Rührbehälter in Form einer Kaskade hintereinander angeordnet sein.

Das erfindungsgemäße Verfahren sieht weiterhin vor, den Waschprozeß in einem Rührreaktor durchzuführen, wobei das zu reinigende Gut gleichzeitig einer intensiven Ultraschalleinwirkung ausgesetzt wird. Obwohl sich durch den intensiven Rührprozeß in der Suspension kein stabiles und örtlich fixiertes Ultraschallfeld aufbauen oder erhalten kann, was gemeinhin als Voraussetzung für einen intensiven Reinigungsprozeß angesehen wird, haben Untersuchungen überraschenderweise gezeigt, daß die Kombination von turbulenten Strömungsverhältnissen in Verbindung mit intensiver Ultraschalleinwirkung eine besonders gute Abreinigung ölverschmutzter Feststoffpartikel bewirkt. Alleiniges Rühren oder alleiniger Ultraschall erzielen unter ansonsten identischen Reinigungsbedingungen keine vergleichbaren Reinigungseffekte. Die zusätzliche Einwirkung von Ultraschall ist daher bei hohen Anforderungen in Hinsicht auf den Restölgehalt und bei schwer zu reinigenden Feststoffen zweckmäßig.

Die Waschfluidentölung erfolgt erfindungsgemäß mittels feinstkörnigen Kokses. Untersuchungen haben gezeigt, daß feinstkörniger Koks ein sehr hohes Adsorptionsvermögen für emulgiertes Öl besitzt, das unter den Bedingungen der Waschfluidentölung sogar höher als das von Aktivkohle ist. Eine Aufsalzung des Waschfluids findet nicht statt, so daß es unbegrenzt im Kreislauf geführt werden kann. Das abgereinigte Öl kann in Form eines stichfesten verbrennungsfähigen Schlammes abgetrennt werden.

Andere, z. B. mechanische, physikalische oder elektrochemische Emulsionstrennverfahren können ebenfalls bei dem Aufbereitungsprozeß eingesetzt werden und die Adsorption an Koks teilweise oder völlig ersetzen.

Eine erfindungsgemäße Vorrichtung zur Ausführung des Verfahrens ist ein sogenannter Ultraschallrührreaktor, der aus einem Rühraggregat einschließlich Antriebsmotor, einem geeigneten Rührbehälter und einer oder mehrerer Ultraschallschwingplatten, die den Inhalt des Rührbehälters beschallen, nebst zugehörigem Generator besteht. Um eine möglichst ausreichende Verweilzeit zu erzielen, werden erfindungsgemäß mehrere Ultraschallrührreaktoren kaskadenartig in Reihe geschaltet. Die geometrischen Abmessungen der Rührbehälter und ihre Anzahl richtet sich nach dem zu reinigenden Gut und dem erwünschten Reinigungsgrad.

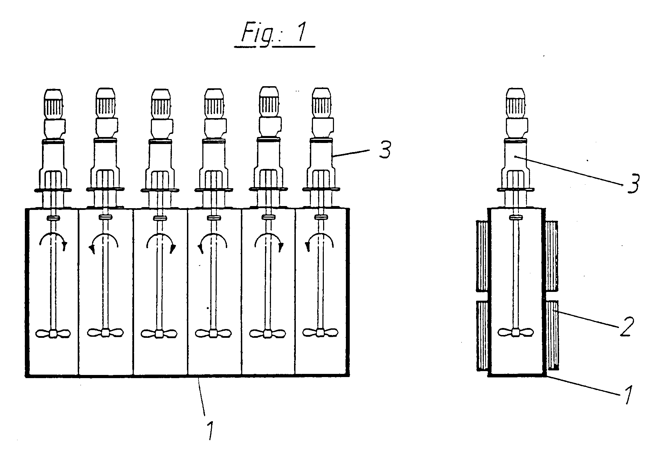

In der Figur 1 wird der schematische Aufbau einer Ultraschallrührkaskade gezeigt. Die Vorrichtung beinhaltet sechs aufeinanderfolgende Rührbehälter 1, wobei nur die mittleren vier Behälter mit seitlich angebrachten Ultraschallplatten 2 ausgerüstet sind. Die beiden äußeren Behälter fungieren als Eintrags- bzw. Austragsbehälter. Jeder Behälter ist mit einem kompletten Rühraggregat 3 ausgerüstet. In den einander benachbarten Behälterwänden sind Öffnungen vorgesehen, durch die die Rührbehälter 1 miteinander verbunden sind.

In besonderen Anwendungsfällen, in denen durch aggressive chemische oder mechanische Kräfte ein hoher Verschleiß der teuren Ultraschallschwinger zu befürchten ist, können diese besonders gekapselt werden, so daß sie nicht mit den aggressiven Medien in Kontakt kommen. Hierzu kann erfindungsgemäß in den Rührreaktor selbst ein verschleißunempfindlicher Einsatz mit guten Ultraschallübertragungseigenschaften eingesetzt werden und die Schallübertragung kann durch einen den Einsatz umgebenden Wassermantel erfolgen.

Für eine weitgehende und effektive Ölabreinigung ist es zweckmäßig, den Reinigungsprozeß mehrstufig durchzuführen, d.h. das zu reinigende Gut durchläuft mehrere Ultraschallrührkaskaden, wobei das Waschfluid die Rührkaskaden bevorzugt im Gegenstrom durchfließt.

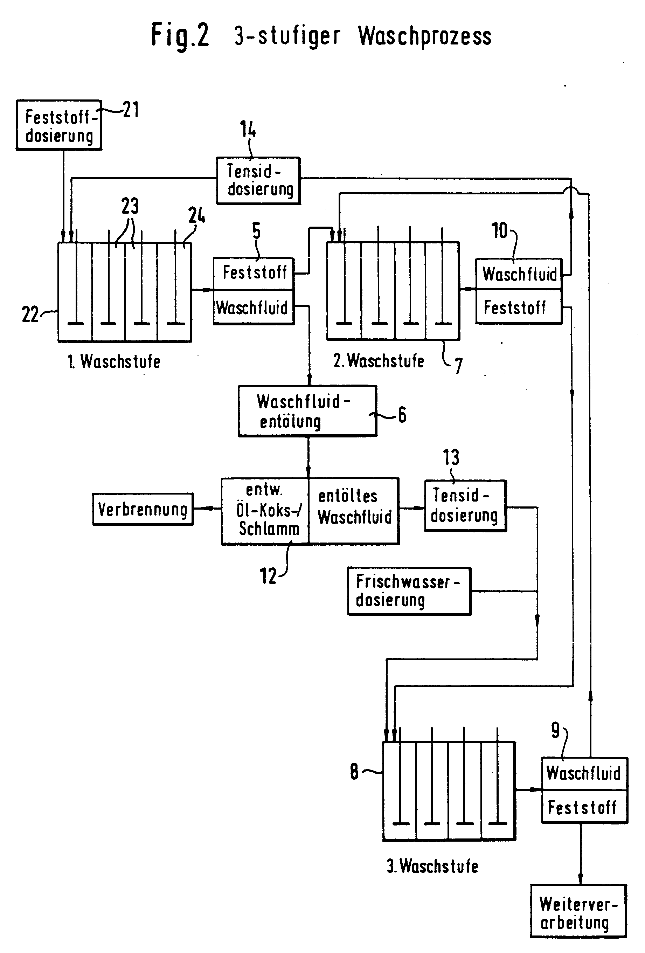

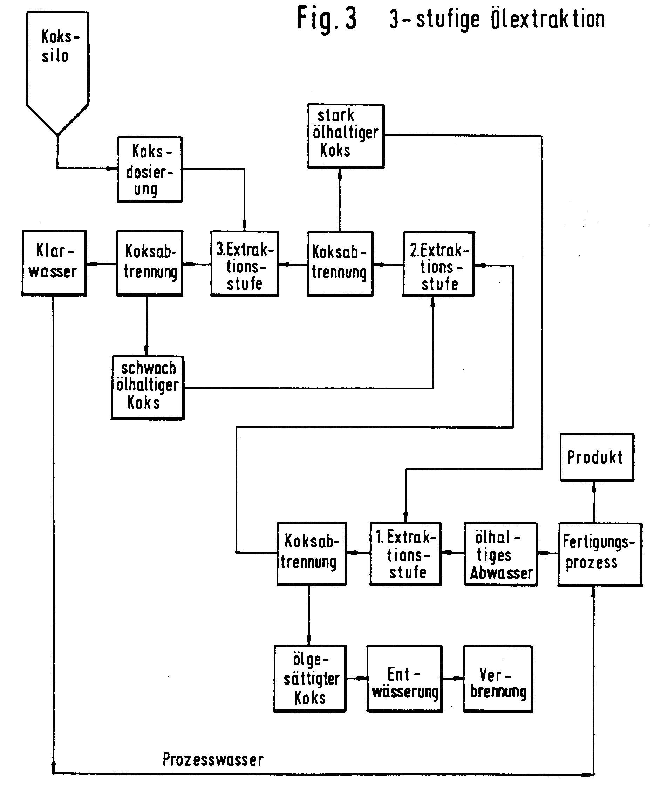

Die einzelnen Verfahrensstufen des erfindungsgemäßen Verfahrens werden nachfolgend anhand von Beispielen näher erläutert, wobei auf die Verfahrensschemen in den Figuren 2 und 3 Bezug genommen wird.

### 1. Verfahrensstufe, Emulgatorzugabe zum Feststoff

### Beispiel 1:

Ein Aluminiumschleifschlamm mit einem Ölgehalt von ca. 50 % wurde zunächst auf herkömmliche Weise mit einer wäßrigen Tensidlösung mit einem Emulgatorgehalt von 10 g/l behandelt, indem 100 g Schleifschlamm mit 1 l Tensidlösung intensiv verrührt wurden. Hierdurch konnte der Ölgehalt des Schleifschlamms auf ca. 35 % reduziert werden.

Daneben wurde eine gleiche Menge von diesem Schleifschlamm mit 2,5 g Emulgator ohne Wasserzugabe in einem Mischer intensiv vermischt und anschließend ohne weitere Emulgatorzugabe mit Wasser verrührt. Hierbei wurde ein Ölgehalt von nur noch 5 % im abgetrennten Feststoff festgestellt. Wurde der Wascheprozeß bei der zweiten Verfahrensweise durch Einwirkung von Ultraschall unterstützt, so konnte der Ölgehalt auf unter 1 % reduziert werden.

### Beispiel 2:

In einem Mischer wurden Magnesiumspäne mit einem Ölgehalt von ca. 10 % intensiv vermischt und gleichzeitig 5 g Emulgator zugesetzt. Im anschließenden Waschprozeß konnte eine Reduzierung des Ölgehalts im abgetrennten Feststoff auf ca. 7 % erreicht werden.

Wurde hingegen der Emulgator als feinster Nebel in die in einem geschlossenen Mischer verwirbelten Metallspäne eingedüst, so konnte ein auf ca. 1 % reduzierter Restölgehalt im abgetrennten Feststoff erhalten werden. Die benötigte Emulgatormenge betrug dabei lediglich 0,2 g. Wie die beschriebenen Beispiele zeigen, bewirkt die intensive Vermischung der Einzelkomponenten in Abwesenheit von Wasser vor dem eigentlichen Waschprozeß eine erhebliche Steigerung der Ölabtrennung und eine deutliche Einsparung an Reagenzien. Letzteres wirkt sich auch auf die notwendige Reinigung der Spülflüssigkeit positiv aus. Die beschriebene Verfahrensstufe hat daher neben einer gesteigerten Effektivität auch erhebliche Kosteneinsparungen zur Folge, wodurch oft erst eine Entölung von Produktionsrückständen wirtschaftlich wird.

### 2. Verfahrensstufe, Ölabreinigung des Feststoffes

Das zu reinigende Gut wird über eine Dosiereinrichtung 21 der Rührkaskade 22 (1. Waschstufe) aufgegeben, wobei gleichzeitig das Waschfluid in vorher bestimmter Menge zudosiert wird. Der Feststoff wird mit dem Waschfluid intensiv verrührt und gleichzeitig mit Ultraschall beschallt. Die Waschsuspension durchläuft die einzelnen miteinander verbundenen Rührkammern 23 und wird in einer speziellen Austragskammer 24 aus der Kaskade ausgetragen. Das Waschfluid wird in einer Trennstufe 5 auf mechanischem Wege vom Feststoff getrennt und in einer besonderen Verfahrensstufe 6 vom aufgenommenen Öl befreit. Der grob gereinigte Feststoff läuft der Rührkaskade 7 (2. Waschstufe) vor, die ähnlich oder gleich wie die 1. Waschstufe aufgebaut ist. Hier erfolgt die Feinabreinigung des Feststoffes. Die Rührkaskade 8 (3. Waschstufe) dient hauptsächlich als Spülstufe, wobei durch das zugefügte, weitgehend unbelastete, gereinigte Waschfluid letzte Ölreste entfernt werden können. Das entölte Gut wird in der Trennstufe 9 vom Waschfluid getrennt, entwässert und je nach Verwendungszweck weiterverarbeitet.

Der Energieeintrag des Ultraschalls soll 5 - 50 W/l betragen. Die für eine weitgehende Entölung notwendige Verweildauer beträgt 5 - 20 min. Der Feststoffgehalt liegt zwischen 50 - 300 g/l.

Die genannten Werte sind weitgehend von den Eigenschaften des zu entölenden Aufgabematerials abhängig und können in Vorversuchen experimentell genauer ermittelt werden.

### 3. Verfahrensstufe, Entölung des Waschfluids

Das nach der 1. Waschstufe abgetrennte, stark mit Öl beladene Waschfluid wird von noch darin enthaltenen Feststoffpartikeln befreit und in ein Rührgefäß der Waschfluidentölung 6 geleitet. Dort wird es mit einer Koksstaubmenge versetzt und intensiv verrührt. Während dieser Zeit adsorbiert der Koksstaub das Öl. Anschließend wird der mit Öl beladene Koksschlamm mittels üblicher Verfahren zur Fest-/Flüssig-Trennung in einer Stufe 12 vom entölten Waschfluid abgetrennt und letzteres wieder in einer Dosierstation 13 mit einer für eine weitere Ölabreinigung ausreichenden Tensidmenge versetzt und der 3. Waschstufe des Waschprozesses zugegeben. Dieses nur schwach mit Öl belastete Waschfluid wird, nachdem es die 3. Waschstufe durchlaufen hat, der 2. Waschstufe aufgegeben. Dort wird fast das gesamte Tensid für die Ölabreinigung verbraucht, so daß es nach Abtrennung vom feingereinigten Feststoff in der Trennstufe 10 wieder in einer Dosierstation 14 mit Tensid angereichert wird, bevor es in die 1. Waschstufe für die Grobreinigung des Feststoffes eingegeben werden kann. In der 1. Waschstufe wird der gesamte Tensidinhalt für die Ölabreinigung verbraucht.

Durch das beschriebene Verfahren ist es möglich, das Waschwasser vollständig zu rezirkulieren und somit den Waschprozeß abwasserfrei zu betreiben. Nur das am gereinigten Feststoff anhaftende und das im abgetrennten Koksschlamm enthaltene Wasser muß durch Frischwasser ersetzt werden.

Die beschriebene einstufige Entölung des Waschfluids kann auch mehrstufig erfolgen, was besonders dann zu empfehlen ist, wenn größere Waschfluidmengen mit höheren Ölgehalten (> 1 %) behandelt werden sollen. In der Figur 3 ist ein dreistufiger Verfahrensablauf skizziert. Die Frischkokszugabe erfolgt in der letzten Extraktionsstufe. Die Kokszugabemenge wird dabei so bemessen, daß der erwünschte Restölgehalt im gereinigten Wasser sicher unterschritten wird. Nach einer mittleren Einrührzeit wird der Koksschlamm mittels bekannter Verfahren vom Waschfluid mechanisch abgetrennt. Dieser Koksschlamm, der nur relativ wenig Öl enthält und dessen Adsorptionskapazität für Öl noch nicht erschöpft ist, wird der 2. Extraktionsstufe zugegeben, in der der Koks die Hauptmenge an Öl aufnehmen kann und das Waschfluid bereits weitgehend vom Öl befreit. Die Abtrennung des ölhaltigen Koksschlammes kann in dieser Stufe entweder konventionell über übliche Schnellklärer o.ä. erfolgen, oder mittels bekannter flotativer Verfahren, da die ölbeladene Kohle sehr gut hydrophobiert ist und somit flotativ leicht abgetrennt werden kann. Während das teilgereinigte Abwasser der 3. Extraktionsstufe vorläuft, wird der abgetrennte Koksschlamm der 1. Extraktionsstufe aufgegeben, in der der Koks mit Öl gesättigt wird. Dieser ölige Koksschlamm kann vorzugsweise flotativ abgetrennt, eingedickt und entwässert werden. Aufgrund eines sehr hohen Brennwertes kann der stichfeste Filterkuchen in geeigneten Kraftwerksanlagen, oder, falls der Schadstoffanteil im Öl zu hoch ist, in entsprechenden Verbrennungsanlagen verfeuert werden.

Der Koksverbrauch des Verfahrens ist von vielen Einzelfaktoren abhängig. Zu nennen wären u.a. verwendete Koksqualität oder Art, Tensidgehalt des Waschfluids, Art des zu entfernenden Öls, erwünschte Ölrestkonzentration im Reinwasser u.a. In den meisten Fällen ist eine 3- bis 4-fache Koksmenge bezogen auf den Ölinhalt des Waschfluids ausreichend.

## Patentansprüche

1. Verfahren zur Entölung von kleinteiligem Feststoffgut, insbesondere metallhaltigen Produktionsrückständen und verunreinigten Böden, bei dem das Feststoffgut mit einer wäßrigen Spülflüssigkeit gewaschen wird, wobei das Öl in der Spülflüssigkeit emulgiert und die Spülflüssigkeit vom Feststoffgut abgetrennt wird, **dadurch gekennzeichnet**, daß das Feststoffgut vor dem Waschprozeß intensiv durchmischt und im wesentlichen ohne Anwesenheit von Wasser gleichzeitig mit einem Emulgator besprüht wird und daß bei dem anschließenden Waschprozeß das Feststoffgut in einem Behälter durch Rühren mit Spülflüssigkeit durchmischt wird.

2. Verfahren nach Anspruch 1, dadurch gekennzeichnet, daß das Durchmischen des Feststoffgutes in einem Freifallmischer oder mittels eines Zwangsmischers erfolgt.

3. Verfahren nach einem der Ansprüche 1 oder 2, dadurch gekennzeichnet, daß das Feststoffgut beim Durchmischen durch Einwirkung eines Luftstroms oder mittels Vibrationen aufgelockert wird.

4. Verfahren nach einem der vorhergehenden Ansprüche, dadurch gekennzeichnet, daß das Feststoffgut in einer geschlossenen Mischkammer verwirbelt wird und daß der Emulgator in Form eines feinen Nebels in die Mischkammer eingeleitet wird.

5. Verfahren nach einem der vorhergehenden Ansprüche, dadurch gekennzeichnet, daß der Emulgator und/oder das Feststoffgut vor oder während des Misch- und Benetzungsvorgangs erwärmt werden.

6. Verfahren nach einem der vorhergehenden Ansprüche, dadurch gekennzeichnet, daß bei wasserhaltigem Feststoffgut vor dem Besprühen mit Emulgator der Wassergehalt durch Trocknen weitgehend reduziert wird.

7. Verfahren nach einem der vorhergehenden Ansprüche, dadurch gekennzeichnet, daß das mit Emulgator benetzte Feststoffgut vor dem Waschprozeß zwischengelagert wird.

8. Verfahren nach einem der vorhergehenden Ansprüche, dadurch gekennzeichnet, daß der Spülflüssigkeit kein Emulgator zugesetzt wird.

9. Verfahren nach einem der vorhergehenden Ansprüche, dadurch gekennzeichnet, daß beim Waschprozeß das mit Emulgator benetzte Feststoffgut mit Spülflüssigkeit vermischt und unter Rühren der Einwirkung von Ultraschall unterworfen wird.

10. Verfahren nach einem der vorhergehenden Ansprüche, dadurch gekennzeichnet, daß das Feststoffgut nach Beendigung des Waschprozesses und vorheriger, weitgehender Entfernung der emulgatorhaltigen Spülflüssigkeit mit einer tensidhaltigen Spülflüssigkeit nachgespült wird.

11. Verfahren nach einem der Ansprüche 9 oder 10, dadurch gekennzeichnet, daß während der Ultraschalleinwirkung zusätzlich turbulente Strömungskräfte mit starken Strömungsscherkräften in das Waschfluid eingetragen werden.

12. Verfahren nach einem der vorhergenden Ansprüche, dadurch gekennzeichnet, daß das zu reinigende Gut mehrere Rührkaskaden durchläuft, wobei das Waschfluid die Rührkaskaden im Gegenstrom durchfließt.

13. Verfahren nach einem der vorhergehenden Ansprüche, dadurch gekennzeichnet, daß die abgetrennte Spülflüssigkeit durch Adsorption an Koks oder kokshaltigen Stoffen entölt und die gereinigte Spülflüssigkeit wieder in den Aufbereitungsprozeß zurückgeführt wird.

14. Verfahren nach Anspruch 13, dadurch gekennzeichnet, daß die Öladsorption des Kokses durch Ölspaltmittel und dessen Abtrennung und Entwässerung durch Flokkungsmittel verbessert wird.

15. Verfahren nach einem der Ansprüche 13 und 14, dadurch gekennzeichnet, daß die Abtrennung des Kokses mittels mechanischer Verfahren erfolgt.

16. Vorrichtung zur Durchführung des Verfahrens nach einem der vorhergehenden Ansprüche, gekennzeichnet durch einen Rührbehälter, dessen Wände Ultraschallgeber tragen, die durch einen austausbaren Schleifschutz vom zu reinigenden Gut getrennt sind.

17. Vorrichtung nach Anspruch 16, dadurch gekennzeichnet, daß mehrere Rührbehälter zu einer Rührkaskade miteinander verbunden sind, wobei die Rührer benachbarter Rührbehälter gegenläufig angetrieben werden.

## Claims

1. Method of removing oil from small-particled solid material, more especially metal-containing production residues and contaminated soils, wherein the solid material is washed with an aqueous rinsing fluid, the oil being emulsified in the rinsing fluid and the rinsing fluid being separated from the solid material, characterised in that the solid material is intensively mixed prior to the washing process and simultaneously sprayed with an emulsifier substantially without the presence of water, and in that, during the subsequent washing process, the solid material is mixed with rinsing fluid in a vessel by agitation.

2. Method according to claim 1, characterised in that the solid material is mixed in a free-fall mixer or by means of a compulsory mixer.

3. Method according to one of claims 1 or 2, characterised in that the solid material is loosened during the mixing process by the effect of an air stream or by means of vibrations.

4. Method according to one of the preceding claims, characterised in that the solid material is spun round in a closed mixing chamber, and in that the emulsifier is introduced into the mixing chamber in the form of a fine mist.

5. Method according to one of the preceding claims, characterised in that the emulsifier and/or the solid material are/is heated prior to or during the mixing and wetting processes.

6. Method according to one of the preceding claims, characterised in that, if the solid material contains water, the water content is largely reduced by drying prior to the emulsifier being sprayed.

7. Method according to one of the preceding claims, characterised in that the solid material, which is wetted with emulsifier, is temporarily stored prior to the washing process.

8. Method according to one of the preceding claims, characterised in that no emulsifier is added to the rinsing fluid.

9. Method according to one of the preceding claims, characterised in that, during the washing process, the solid material which is wetted with emulsifier is mixed with rinsing fluid and subjected to the effect of ultrasonics whilst being agitated.

10. Method according to one of the preceding claims, characterised in that the solid material is subsequently rinsed with a rinsing fluid containing surfactants after termination of the washing process and after the emulsifier-containing rinsing fluid has previously and largely been removed.

11. Method according to one of claims 9 or 10, characterised in that, during the effect of ultrasonics, turbulent flow forces having strong flow shearing forces are additionally introduced into the washing fluid.

12. Method according to one of the preceding claims, characterised in that the material to be cleaned passes through a plurality of agitator cascades, the washing fluid flowing through the agitator cascades in countercurrent.

13. Method according to one of the preceding claims, characterised in that oil is removed from the separated rinsing fluid by the adsorption of coke or coke-containing substances, and the cleaned rinsing fluid is returned again to the treatment process.

14. Method according to claim 13, characterised in that the oil adsorption of the coke is improved by oil separators, and its separation and dehydration is improved by flocculation agents.

15. Method according to one of claims 13 and 14, characterised in that the coke is separated by means of mechanical processes.

16. Device for accomplishing the method according to one of the preceding claims, characterised by an agitator vessel, the walls of which are provided with ultrasonic generators separated from the material to be cleaned by an interchangeable anti-grinding means.

17. Device according to claim 16, characterised in that a plurality of agitator vessels are interconnected to form an agitator cascade, the agitators of adjacent agitator vessels being driven in opposite directions.

## Revendications

1. Procédé pour le déshuilage de produits solides à grains fins, en particulier de résidus de production métallifères et de sols souillés, selon lequel les produits solides sont lavés à l'aide d'un liquide de rinçage aqueux, étant précisé que l'huile forme une émulsion dans le liquide de rinçage et que celui-ci est séparé des produits solides, caractérisé en ce que les produits solides sont mélangés de façon intensive avant le lavage et aspergés en même temps à l'aide d'un émulsifiant, pratiquement sans présence d'eau, et en ce que lors du lavage consécutif, les produits solides sont mélangés par brassage dans un récipient à un liquide de rinçage.

2. Procédé selon la revendication 1, caractérisé en ce que le mélange des produits solides a lieu dans un malaxeur à chute libre ou à l'aide d'un malaxeur à mélange forcé.

3. Procédé selon l'une des revendications 1 ou 2, caractérisé en ce que les produits solides sont aérés, lors du mélange, grâce à l'action d'un courant d'air ou à l'aide de vibrations.

4. Procédé selon l'une des revendications précédentes, caractérisé en ce que les produits solides sont soumis dans une chambre de mélange fermée à un tourbillonnement, et en ce que l'émulsifiant est introduit dans la chambre de mélange sous la forme d'un fin brouillard.

5. Procédé selon l'une des revendications précédentes, caractérisé en ce que l'émulsifiant et/ou les produits solides sont chauffés avant ou pendant l'opération de mélange et de réticulation.

6. Procédé selon l'une des revendications précédentes, caractérisé en ce que, dans le cas de produits solides aqueux, la teneur en eau est largement réduite par séchage avant l'aspersion à l'aide de l'émulsifiant.

7. Procédé selon l'une des revendications précédentes, caractérisé en ce que les produits solides réticulés à l'aide de l'émulsifiant sont stockés provisoirement avant le lavage.

8. Procédé selon l'une des revendications précédentes, caractérisé en ce qu'aucun émulsifiant n'est ajouté au liquide de rinçage.

9. Procédé selon l'une des revendications précédentes, caractérisé en ce que, lors du lavage, les produits solides réticulés à l'aide de l'émulsifiant sont mélangés au liquide de rinçage et soumis, en étant brassés, à l'action d'ultrasons.

10. Procédé selon l'une des revendications précédentes, caractérisé en ce que les produits solides, après l'achèvement du lavage et l'importante élimination préalable du liquide de rinçage contenant de l'émulsifiant, est rincé ultérieurement à l'aide d'un liquide de rinçage contenant un agent tensioactif.

11. Procédé selon l'une des revendications 9 ou 10, caractérisé en ce que des forces d'écoulement turbulentes présentant des forces de cisaillement d'écoulement importantes sont introduites en supplément dans le fluide de lavage pendant l'action des ultrasons.

12. Procédé selon l'une des revendications précédentes, caractérisé en ce que le produit à purifier traverse plusieurs cascades de brassage, le fluide de lavage traversant celles-ci à contre-courant.

13. Procédé selon l'une des revendications précédentes, caractérisé en ce que le liquide de rinçage séparé est déshuilé par adsorption sur du coke ou des matières contenant du coke, et le liquide de rinçage purifié est ramené dans le processus de traitement.

14. Procédé selon la revendication 13, caractérisé en ce qu'on améliore l'adsorption d'huile par le coke au moyen d'agents de séparation d'huile, et la séparation et la déshydratation de celui-ci au moyen de floculants.

15. Procédé selon l'une des revendications 13 et 14, caractérisé en ce que la séparation du coke a lieu à l'aide de procédés mécaniques.

16. Dispositif pour la mise en oeuvre du procédé selon l'une des revendications précédentes, caractérisé par un récipient de brassage dont les parois portent des émetteurs d'ultrasons qui sont séparés du produit à purifier par une protection anti-usure échangeable.

17. Dispositif selon la revendication 16, caractérisé en ce que plusieurs récipients de brassage sont reliés entre eux pour former une cascade de brassage, les appareils de brassage de récipients voisins étant entraînés en sens inverse.
